# EUROPÄISCHE PATENTSCHRIFT

(11) **EP 1 873 681 B1**
(45) Veröffentlichungstag und Bekanntmachung des Hinweises auf die Patenterteilung: **18.05.2011**
(21) Anmeldenummer: 07011694.2
(22) Anmeldetag: 14.06.2007
(51) Int. Cl.: G06K 7/00, G06K 17/00, G06F 17/30, G06K 19/077, H04M 1/00

(54) **RFID-System**
RFID-System
Système RFID

(30) Priorität: 01.07.2006 DE 202006010232 U
(43) Veröffentlichungstag der Anmeldung: 02.01.2008
(73) Patentinhaber: Leuze electronic GmbH + Co. KG, 73277 Owen/Teck (DE)
(72) Erfinder: Wörner, Jörg, Pittsford, NY 14534 (US); Köbel, Herbert, 73277 Owen/Teck (DE); Amler, Andreas, 72660 Beuren (DE); Claus, Armin, 72622 Nürtingen (DE)
(74) Vertreter: Ruckh, Rainer Gerhard

(56) Entgegenhaltungen:
- WO-A-01/50224
- WO-A-2005/113147
- WO-A-2006/030713
- DE-A1- 10 056 521
- US-A1- 2004 155 106
- US-A1- 2006 006 231
- US-A1- 2006 071 778

## Beschreibung

Die Erfindung betrifft ein RFID-System gemäß dem Oberbegriff des Anspruchs 1.

Derartige RFID-Systeme werden in unterschiedlichen industriellen Applikationen, insbesondere zur Objektidentifikation und zur Objektverfolgung, eingesetzt. Beispiele hierfür sind Transport- und Förderprozesse im Bereich der Förder- und Lagertechnik. Dort kann durch Kennzeichnung der zu fördernden Objekte mittels Transpondern eine genaue Objektverfolgung durchgeführt werden.

Ein derartiges RFID-System umfasst wenigstens eine Sende- und Empfangseinheit und eine vorgegebene Anzahl von Transpondern, die zur Kennzeichnung von Objekten verwendet werden.

Die Sende- und Empfangseinheit des RFID-Systems weist eine Antenne zum Aussenden von Signalen im Radio-Frequenzbereich auf. Die Transponder, oft auch als Tags bezeichnet, weisen Antennen zum Empfang dieser Signale und einen Chip, in dem die jeweiligen Produktdaten hinterlegt sind, auf. Je nachdem, ob die Transponder als aktive oder passive Einheiten ausgebildet sind, weisen diese eine eigene Energieversorgung auf oder nicht. Im letzteren Fall erfolgt die Energieversorgung der passiven Transponder über das von der Sende- und Empfangseinheit emittierte Feld.

Je nach Frequenz der von der Sende- und Empfangseinheit emittierten Signale erfolgt die Datenübertragung zwischen der Sende- und Empfangseinheit induktiv über ein Nahfeld oder über ein elektromagnetisches Fernfeld.

Die Datenübertragung zwischen der Sende- und Empfangseinheit und den einzelnen Transpondern kann bei RFID-Systemen nach verschiedenen Verfahren erfolgen. Die Datenübertragung zwischen Sende- und Empfangseinheit und einem Transponder kann dabei zeitversetzt nach einem Halbduplex-Übertragungsverfahren oder zeitgleich in beide Richtungen nach einem Vollduplex-Übertragungsverfahren erfolgen. Insbesondere kann die Datenübertragung nach einem Backscatter-Verfahren erfolgen. Hier wird ein von der Sende- und Empfangseinheit emittiertes Trägersignal durch den jeweiligen Transponder zur Generierung seiner Rückmeldung moduliert. Dieses Verfahren eignet sich insbesondere für RFID-Systeme mit passiven Transpondern, das heißt, Transpondern ohne eigene Energieversorgung, da das Trägersignal der Sende- und Empfangseinheit gleichzeitig zur Energieversorgung des jeweiligen Transponders genutzt werden kann.

Generell weist die Sende- und Empfangseinheit eines RFID-Systems eine Rechnereinheit zur Vorgabe und Steuerung der Funktionen des RFID-Systems auf. In der Rechnereinheit ist eine Systemsoftware integriert, welche die für die jeweiligen Applikationen des RFID-Systems notwendigen Funktionen vorgibt. Insbesondere können in der Rechnereinheit hierzu Parameterwerte abgespeichert sein.

Bei bekannten RFID-Systemen kann eine Programmiereinheit vorgesehen sein, die zur Parametrierung der Sende- und Empfangseinheit dient. Die Programmiereinheit besteht typischerweise aus einem Personalcomputer (PC), auf welchem eine Parametriersoftware installiert ist.

Zur Parametrierung der Sende- und Empfangseinheit kann an diese die Programmiereinheit angeschlossen werden, so dass dann die aktuellen Parameterwerte von dieser in die Sende- und Empfangseinheit eingelesen werden können.

Nachteilig hierbei ist, dass die aktuelle Version der Parametriersoftware der Programmiersoftware an die aktuelle Version der Systemsoftware der Sende- und Empfangseinheit angepasst sein muss, damit über die Programmiereinheit einen Parametrierung der Sende- und Empfangseinheit durchgeführt werden kann.

Dies bedeutet einen unerwünscht hohen Aufwand bei der Entwicklung derartiger RFID-Systeme und auch einen erheblichen Logistikaufwand bei dem späteren Einsatz der RFID-Systeme in industriellen Applikationen, da parallel von Entwicklung und der Systemsoftware der Sende- und Empfangseinheit auch die Parametriersoftware aktualisiert werden muss.

Ein RFID-System mit den Merkmalen des Oberbegriffs des Anspruchs 1 ist aus der US 2006/0006231A bekannt. Das dort beschriebene System bildet ein RFID-Lesegerät zum Lesen von Codes, wobei dieses einen Webserver enthält über welchen Daten zur Parametrierung eingelesen werden können.

Aus der WO 2005/113147 A2 ist ein System zum Erfassen und Recherchieren biologischer Daten bekannt. Das System umfasst einen RFID-Leser, der über eine USB Schnittstelle mit einem Personalcomputer verbunden werden kann, wobei dieser Computer über einen Webserver mit einer zentralen Datenbank verbunden ist.

Die WO 2006/030713 A1 (siehe auch EP 1 818 271) betrifft ein Messsystem mit Temperatursensoren und einem RFID-Lesegerät, das einen Webserver aufweist. Temperaturwerte als Messdaten können über den Webserver auf ein Mobiltelefon mit Webserver ausgegeben werden.

Die US 2004/0155106 A1 betrifft ein System zum Transport von Daten, wobei Daten aus einem RFID-Lesegerät an einen Rechner mit Webserver übertragen werden. Von dort erfolgt ein Datentransfer über das Internet.

Der Erfindung liegt die Aufgabe zugrunde, ein RFID-System der eingangs genannten Art bereit zu stellen, bei welchem mit möglichst geringem Aufwand dessen Funktionalität vorgebbar und kontrollierbar ist.

Zur Lösung dieser Aufgabe sind die Merkmale des Anspruchs 1 vorgesehen.

Das erfindungsgemäße RFID-System umfasst wenigstens eine Sende- und Empfangseinheit mit einer Antenne zum Aussenden von Signalen im Radio-Frequenzbereich sowie einer Anordnung von Transpondern. Jeder Transponder weist eine Antenne und einen Chip mit einem permanenten Speicher auf. In der Sende- und Empfangseinheit ist ein Webserver integriert, welcher mittels eines Webbrowsers einer Rechnereinheit über das Internet ansprechbar ist, so dass über den Webserver Daten in die Sende- und Empfangseinheit einlesbar oder aus dieser auslesbar sind. Als Betriebsdaten sind Status- und/oder Fehlermeldungen auslesbar. Anhand der ausgelesenen Betriebsdaten ist eine Fernwartung durchführbar, und als Ergebnis der Fernwartung sind Steuerbefehle über den Webserver einlesbar. Das Radio-Frequenzbereich RFID-System bildet ein Positionier System für ein Fahrzeug. Die Transponder sind an einer Fahrbahnbegrenzung ortsfest angebracht und bilden ein Maßband. Zur Ausbildung des Maßbandes ist in dem Chip jedes Transponders eine Nummer hinterlegt, welche die Position des jeweiligen Transponders innerhalb des Maßbandes eindeutig kennzeichnet. Zur Positionierung des Fahrzeugs wird über die Sende- und Empfangseinheit jeweils der Positionswert aus dem Chip des Transponders ausgelesen. Auf dessen Höhe befindet sich die Sende- und Empfangseinheit gerade.

Durch die Integration eines Webservers in der oder in jeder Sende- und Empfangseinheit des RFID-Systems wird eine universelle Schnittstelle zur Vorgabe und Kontrolle der Funktionalität des RFID-Systems geschaffen.

Ein wesentlicher Vorteil der Erfindung besteht darin, dass durch die Integration des Webservers in einer Sende- und Empfangseinheit an diese eine Rechnereinheit mit einem Webbrowser angeschlossen werden kann, um damit die Funktion des RFID-Systems zu definieren bzw. zu kontrollieren. Die von der Rechnereinheit mit dem Webbrowser gebildete Einheit bedarf keinerlei Anpassung an das RFID-System. Insbesondere braucht in der so gebildeten externen Einheit keine an das RFID-System angepasste spezifische Software integriert sein, um mit diesem kommunizieren zu können. Vielmehr sind sämtliche systemspezifische Funktionen und applikationsspezifischen Daten allein in der Sende- und Empfangseinheit des RFID-Systems integriert. Bei einer Weiterentwicklung des RFID-Systems braucht somit nur die Systemsoftware der Sende- und Empfangseinheit weiter entwickelt werden, die von der Rechnereinheit und dem Webbrowser gebildete externe Einheit kann jedoch in unveränderter Form an das RFID-System angeschlossen werden.

Durch die Integration des Webservers in der Sende- und Empfangseinheit kann das erfindungsgemäße RFID-System somit von Standardrechnem über das Internet angesprochen werden.

Generell können über den Webserver der Sende- und Empfangseinheit Daten in die Sende- und Empfangseinheit eingelesen und/oder von der Sende- und Empfangseinheit an die jeweilige externe Einheit ausgelesen werden um die Funktionalität des RFID-Systems vorzugeben oder zu kontrollieren.

Erfindungsgemäß werden über den Webserver von der Sende- und Empfangseinheit Betriebsdaten, insbesondere Status- und Fehlermeldungen des RFID-Systems, an externe Einheiten ausgegeben, wodurch eine Fernwartung des RFID-Systems über das Internet möglich wird. Besonders vorteilhaft können in Abhängigkeit der Fehler- und Statusmeldungen von den externen Einheiten aus spezifische Reaktionen auf Fehlerzustände des RFID-Systems ausgelöst werden können. Dies bedeutet, dass neben der Fernwartung sogar auch eine Fernsteuerung des RFID-Systems möglich wird.

Die Erfindung wird im Nachstehenden anhand der Zeichnungen erläutert. Es zeigen:
- Figur 1:: Schematische Darstellung eines Positioniersystems mit einem RFID-System.
- Figur 2:: Ankopplung der Sende- und Empfangseinheit des RFID-Systems gemäß Figur 1 an eine extreme Einheit.

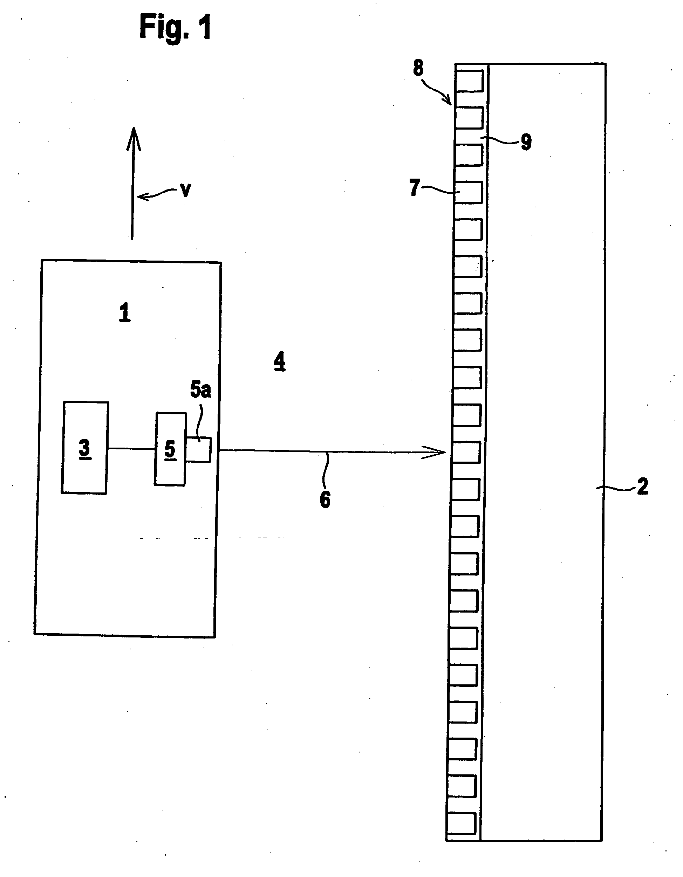

Figur 1 zeigt schematisch ein Positioniersystem zur Positionierung eines Fahrzeugs 1 als fahrbarer Einheit relativ zu einer Fahrbahnbegrenzung 2 als stationärem Gegenstand, wobei die Fahrbahnbegrenzung 2 von einer Leitplanke oder dergleichen gebildet sein kann. Das Fahrzeug 1 ist im vorliegenden Fall von einem spurgeführten Verschiebewagen gebildet, der längs einer definierten Spur entlang der Fahrbahnbegrenzung 2 vorbei bewegt wird. Das Fahrzeug 1 wird mit einer Steuerung 3 gesteuert. Zur Durchführung von Bearbeitungsvorgängen wie Be- und Entladevorgängen muss das Fahrzeug 1 an vorgegebenen Positionen an der Fahrbahnbegrenzung 2 angehalten werden.

Zur Positionierung des Fahrzeugs 1 an diesen Positionen ist das Positioniersystem vorgesehen, welches von einem RFID-System 4 gebildet ist. Das RFID-System 4 umfasst eine Sende- und Empfangseinheit 5 mit einer Antenne 5a zum Aussenden von Signalen 6 im Radio-Frequenzbereich. In der Sende- und Empfangseinheit 5 erfolgt integriert eine Generierung von Positionssignalen, die zur Positionierung des Fahrzeugs 1 in die Steuerung 3 eingelesen werden.

Das RFID-System 4 wird komplettiert durch eine Anordnung von Transpondern 7. Die Transponder 7 sind an der Fahrbahnbegrenzung 2 ortsfest angebracht und bilden ein Maßband 8. Hierzu sind die Transponder 7, wie in Figur 1 dargestellt, in der Bewegungsrichtung des Fahrzeugs 1, die in Figur 1 mit v gekennzeichnet ist, in einer linearen Anordnung an der Fahrbahnbegrenzung 2 angeordnet. Die Transponder 7 weisen dabei einen jeweils identischen Aufbau auf, wobei insbesondere auch die Abmessungen der einzelnen Transponder 7 identisch sind. Zur Ausbildung des Maßbands 8 sind die Transponder 7 in äquidistanten Abständen auf einem Träger 9 aufgebracht, der auf der Fahrbahnbegrenzung 2 befestigt ist.

Jeder Transponder 7 weist eine Antenne sowie einen Chip mit einem permanenten Speicher auf. Zur Ausbildung des Maßbands 8 ist in dem Chip jedes Transponders 7 eine Nummer hinterlegt, welche die Position des jeweiligen Transponders 7 innerhalb des Maßbands 8 eindeutig kennzeichnet. Die jeweilige Nummer des Transponders 7 ist im permanenten Speicher des Chips abgespeichert.

Zur Positionierung des Fahrzeugs 1 wird, wie aus Figur 1 ersichtlich, über die Sende- und Empfangseinheit 5 jeweils der Positionswert aus dem Chip des Transponders 7 ausgelesen, auf dessen Höhe sich die Sende- und Empfangseinheit 5 gerade befindet.

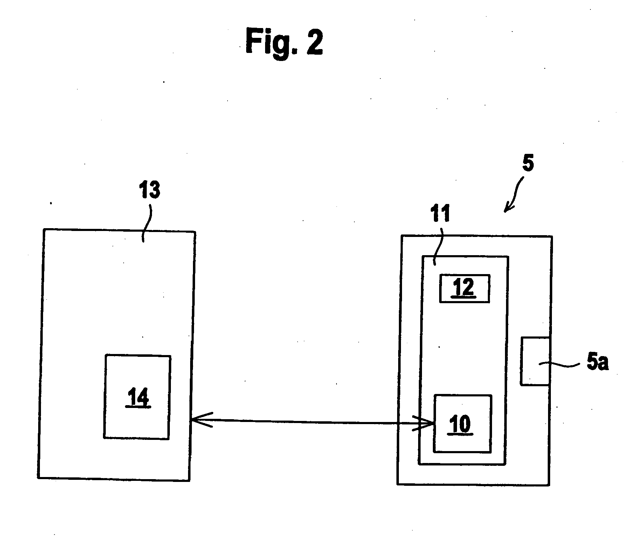

Zur Vorgabe und/oder Kontrolle der Funktionen des RFID-Systems 4 kann die Sende- und Empfangseinheit 5 an eine externe Einheit angeschlossenen, wie in Figur 2 schematisch dargestellt ist.

Als universelle, internetfähige Schnittstelle weist die Sende- und Empfangseinheit 5 hierzu einen Webserver 10 auf. Der Webserver 10 bildet das Softwaremodul, welches in einer in der Sende- und Empfangseinheit 5 integrierten Rechnereinheit 11 integriert ist. Neben dem Webserver 10 ist auf der Rechnereinheit 11 eine Systemsoftware installiert, welche die Funktionen des RFID-Systems 4 bei der Detektion der Transponder 7 vorgibt. Insbesondere erfolgt mit der Systemsoftware die Auswertung der Positionsinformationen. Weiterhin weist die Sende- und Empfangseinheit 5 eine Speichereinheit 12 auf, in welcher spezifische, applikationsspezifische Parameterwerte des RFID-Systems 4 hinterlegt sind.

Über den Webserver 10 erfolgt der Anschluss an eine externe Einheit, die im vorliegenden Fall von einem Personalcomputer (PC) 13 mit integriertem Webbrowser 14 gebildet ist. Generell kann die externe Einheit von einem internetfähigen Rechnersystem mit Webbrowser 14 gebildet sein.

Bei der Sende- und Empfangseinheit 5 gemäß Figur 2 ist allein die Systemsoftware applikations- und versionsabhängig. Der Webserver 10 dagegen definiert eine hiervon unabhängige universelle Schnittstelle, an welche die externen Einheiten anschließbar sind, ohne dass in diesen spezifische Daten des RFID-Systems 4 hinterlegt sein müssen.

Erfindungsgemäß kann der Personalcomputer 13 zu einer Fernwartung des RFID-Systems 4 genutzt werden. Hierzu werden von dem Personalcomputer 13 Betriebsdaten, insbesondere Status- und Fehlermeldungen, die in der Rechnereinheit 11 der Sende- und Empfangseinheit 5 generiert werden, ausgelesen. In dem Personalcomputer 13 kann eine Auswertung dieser Fehler- und Statusmeldungen erfolgen. Generell kann dann anhand der Fehler- und Statusmeldungen in dem Personalcomputer 13 selbsttätig oder über eine Benutzeingabe ein Steuerbefehl als Reaktion auf eine Fehler- oder Statusmeldung generiert und in die Sende- und Empfangseinheit 5 eingelesen werden. So kann beispielsweise bei Vorhandensein einer Fehlermeldung das betreffende RFID-System 4 abgeschaltet oder in einen Notbetrieb umgeschaltet werden.

Generell kann das RFID-System 4 auch dahingehend erweitert sein, dass dieses mehrere Sende- und Empfangseinheiten 5 aufweist. Besonders vorteilhaft ist dann in jedem der Sende- und Empfangseinheiten 5 im Webserver 10 zum Anschluss an eine externe Einheit integriert. Bei Auftreten eines Fehlers in einer Sende- und Empfangseinheit 5 kann dann beispielsweise durch die Fernwartung ein Steuerbefehl derart generiert werden, dass eine noch intakte Sende- und Empfangseinheit 5 die Funktion der ausgefallenen Sende- und Empfangseinheit 5 mit übernimmt.

### Bezugszeichenliste

- (1): Fahrzeug
- (2): Fahrbahnbegrenzung
- (3): Steuerung
- (4): RFID-System
- (5): Sende- und Empfangseinheit
- (5a): Antenne
- (6): Signal
- (7): Transponder
- (8): Maßband
- (9): Träger
- (10): Webserver
- (11): Rechnereinheit
- (12): Speichereinheit
- (13): Personalcomputer
- (14): Webbrowser

## Patentansprüche

1. RFID-System (4) mit wenigstens einer Sende- und Empfangseinheit (5) mit einer Antenne (5a) zum Aussenden von Signalen (6) im Radio-Frequenzbereich
sowie einer Anordnung von Transpondern (7), wobei jeder Transponder eine Antenne und einen Chip mit einem permanenten Speicher aufweist,
wobei in der Sende- und Empfangseinheit (5) ein Webserver (10) integriert ist,
welcher mittels eines Webbrowsers einer Rechnereinheit (11) über das Internet ansprechbar ist,
so dass über den Webserver (10) Daten in die Sende- und Empfangseinheit (5) einlesbar oder aus dieser auslesbar sind, wobei
als Betriebsdaten Status- und/oder Fehlermeldungen auslesbar sind,
anhand der ausgelesenen Betriebsdaten eine Fernwartung durchführbar ist,
und als Ergebnis der Fernwartung Steuerbefehle über den Webserver (10) einlesbar sind,
**dadurch gekennzeichnet, dass**
das Radio-Frequenzbereich RFID-System (4) ein Positionier-System für ein Fahrzeug (1) bildet, wobei die Transponder (7) an einer Fahrbahnbegrenzung ortsfest angebracht sind und ein Maßband (8) bilden, wobei zur Ausbildung des Maßbandes (8) in dem Chip jedes Transponders eine Nummer hinterlegt ist, welche die Position des jeweiligen Transponders innerhalb des Maßbandes (8) eindeutig kennzeichnet,
und dass zur Positionierung des Fahrzeugs (1) über die Sende- und Empfangseinheit (5) jeweils der Positionswert aus dem Chip des Transponders (7) ausgelesen wird, auf dessen Höhe sich die Sende- und Empfangseinheit (5) gerade befindet.

## Claims

1. RFID system (4) comprising at least one transmitting and receiving unit (5) with an antenna (5a) for transmitting signals (6) in the radio frequency range as well as an arrangement of transponders (7), wherein each transponder comprises an antenna and a chip with a permanent memory, wherein integrated in the transmitting and receiving unit (5) is a web server (10) which by means of a web browser of a computer unit (11) can respond by way of the Internet so that data can be read into or read out of the transmitting and receiving unit (5) by way of the web server (10), wherein status and/or error reports can be read out as operating data, a remote maintenance can be performed on the basis of the read-out operating data and as a result of the remote maintenance control commands can be read in by way of the web server (10), **characterised in that** the radio frequency range RFID system (4) forms a positioning system for a vehicle, wherein the transponders (7) are mounted in stationary position at a roadside and form a measuring strip (8), wherein for formation of the measuring strip (8) a number which uniquely characterises the position of the respective transponder within the measuring strip (8) is filed in the chip of each transponder and that for positioning the vehicle (1) the positioning value is on each occasion read out of the chip of the transponder (7), at the level of which transmitting and receiving unit (5) is just located, by way of the transmitting and receiving unit (5).

## Revendications

1. Système RFID (4) comprenant au moins une unité d'émission et de réception (5) avec une antenne (5a) pour l'émission de signaux (6) dans la gamme des radiofréquences
ainsi qu'un arrangement de transpondeurs (7), chaque transpondeur présentant une antenne et une puce avec une mémoire permanente,
un serveur Web (10) étant intégré dans l'unité d'émission et de réception (5), lequel est accessible via Internet au moyen d'un navigateur Web d'une unité de calcul (11),
de sorte que des données peuvent être entrées dans l'unité d'émission et de réception (5) ou extraites de celle-ci par l'intermédiaire du serveur Web (10), sachant que
des messages d'état et/ou d'erreur peuvent être extraites en tant que données d'exploitation,
une télémaintenance est réalisable à l'aide des données d'exploitation extraites,
et que, comme résultat de la télémaintenance, des instructions de commande peuvent être entrées par l'intermédiaire du serveur Web (10),
**caractérisé en ce que**
le système RFID (4) par radiofréquences forme un système de positionnement pour un véhicule (1), les transpondeurs (7) étant installés en position fixe sur une délimitation de voie de circulation et formant un ruban de mesure (8), un numéro qui identifie sans équivoque la position du transpondeur respectif à l'intérieur du ruban de mesure (8) étant enregistré dans la puce de chaque transpondeur pour former le ruban de mesure (8),
et que pour positionner le véhicule (1) au moyen de l'unité d'émission et de réception (5), la valeur de position est lue dans la puce du transpondeur (7) à hauteur duquel l'unité d'émission et de réception (5) se trouve à cet instant précis.
